# EUROPEAN PATENT SPECIFICATION

(11) **EP 2 993 024 B1**
(45) Date of publication and mention of the grant of the patent: **06.03.2019**
(21) Application number: 15182781.3
(22) Date of filing: 27.08.2015
(51) Int. Cl.: B29C 45/66

(54) **INJECTION MOLDING MACHINE**
SPRITZGIESSMASCHINE
MACHINE DE MOULAGE A INJECTION

(30) Priority: 02.09.2014 JP 2014178134
(43) Date of publication of application: 09.03.2016
(73) Proprietor: SUMITOMO HEAVY INDUSTRIES, LTD., Tokyo 141-6025 (JP)
(72) Inventor: MIYATAKE, Tsutomu, Yokusuka-shi, Kanagawa 237-8555 (JP)
(74) Representative: Louis Pöhlau Lohrentz

(56) References cited:
- JP-A- H11 147 242
- US-A- 5 306 136
- US-A1- 2003 008 035

## Description

### BACKGROUND OF THE INVENTION

### Field of the Invention

The present invention relates to an injection molding machine.

### Description of Related Art

An injection molding machine includes a mold clamping unit which performs mold closing, mold clamping, and mold opening of a mold unit, and the like (refer to, for example, Japanese Unexamined Patent Application Publication No. 2004-249637). The mold clamping unit includes a stationary platen, a movable platen, a rear platen, a toggle mechanism, a mold clamping motor, and the like. A stationary mold is mounted on the stationary platen, and a movable mold is mounted on the movable platen. The mold unit is configured with the stationary mold and the movable mold. The rear platen is connected to the stationary platen through a plurality of tie bars. The movable platen is disposed between the stationary platen and the rear platen, and the toggle mechanism is disposed between the movable platen and the rear platen. The mold clamping motor moves the movable platen through the toggle mechanism. In this way, the mold closing, the mold clamping, and the mold opening of the mold unit are performed.

Prior Art document JPH11147242 discloses an injection molding machine in which a stationary platen, a movable platen, a rear platen, and an adsorption plate are arranged in sequence. A toggle mechanism is fixed to and extends into the adsorption platen.

US Patent US 5 306 136 discloses an injection molding machine in which a motor drives a male screw to vary the distance of two symmetrically arranged female screws of a toggle mechanism. The toggle mechanism extends through a rear platen of the injection molding machine.

In the related art, a lubricant (for example, grease) of the toggle mechanism is distributed between the stationary platen and the rear platen, thereby causing contamination between them. For this reason, the mold unit is sometimes contaminated.

### SUMMARY OF THE INVENTION

The present invention has been made in view of the above-described problem and has a main object to provide an injection molding machine in which it is possible to reduce the amount of a lubricant which is distributed from a toggle mechanism between a stationary platen and a rear platen.

In order to solve the problem, according to an aspect of the present invention, there is provided an injection molding machine including a stationary platen on which a stationary mold is mounted, a movable platen on which a movable mold is mounted, a rear platen which is disposed on the side opposite to that of the stationary platen with respect to the movable platen, a toggle mechanism which is supported by the rear platen, and a mold clamping motor which moves the movable platen through the toggle mechanism, in which the toggle mechanism is disposed on the side opposite to that of the movable platen with respect to the rear platen.

According to the aspect of the present invention, an injection molding machine is provided in which it is possible to reduce the amount of a lubricant which is distributed from a toggle mechanism between a stationary platen and a rear platen.

### BRIEF DESCRIPTION OF THE DRAWINGS

Fig. 1 is a diagram when an injection molding machine at the time of mold opening completion according to an embodiment of the present invention is viewed from the side.
Fig. 2 is a diagram when the injection molding machine at the time of mold closing completion according to the embodiment of the present invention is viewed from the side.
Fig. 3 is a diagram when the injection molding machine at the time of mold clamping according to the embodiment of the present invention is viewed from the side.
Fig. 4 is a diagram when the injection molding machine at the time of mold clamping according to the embodiment of the present invention is viewed from above.
Fig. 5 is a diagram when the injection molding machine at the time of mold clamping according to the embodiment of the present invention is viewed from the rear.

### DETAILED DESCRIPTION OF THE INVENTION

Hereinafter, a mode for carrying out the present invention will be described with reference to the drawings. However, in each of the drawings, an identical or a corresponding configuration is denoted by an identical or a corresponding reference numeral and a description thereof is omitted.

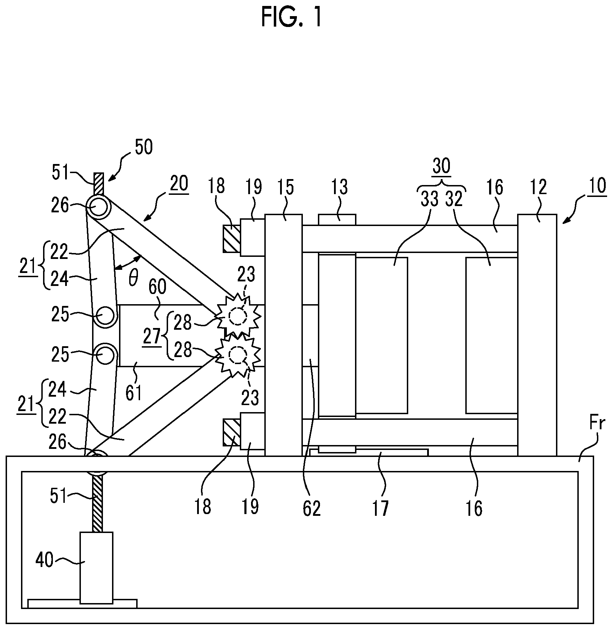

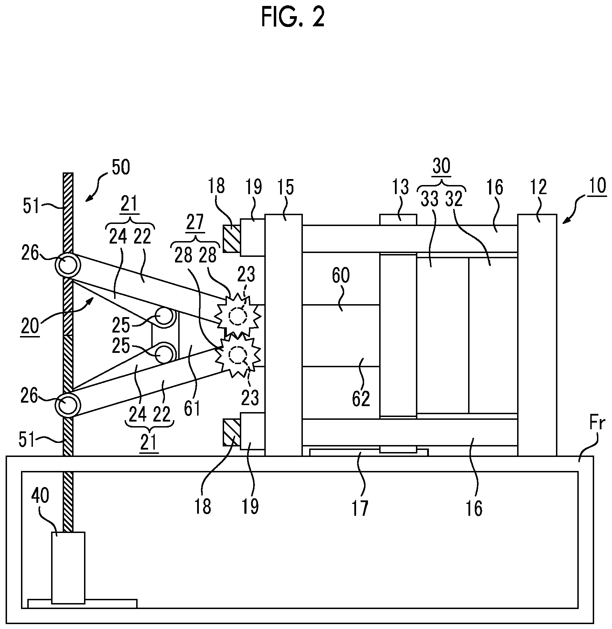

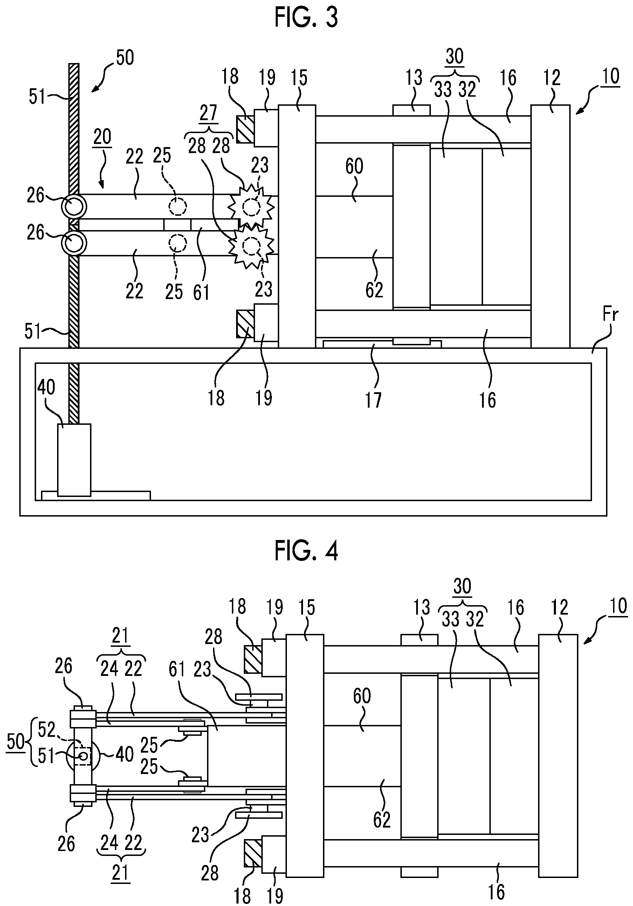

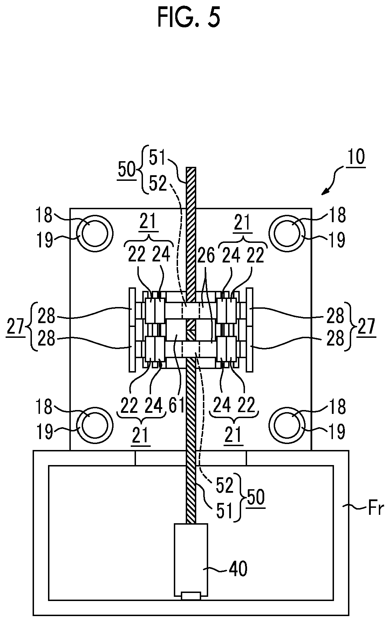

Fig. 1 is a diagram when an injection molding machine at the time of mold opening completion according to an embodiment of the present invention is viewed from the side. Fig. 2 is a diagram when the injection molding machine at the time of mold closing completion according to the embodiment of the present invention is viewed from the side. Fig. 3 is a diagram when the injection molding machine at the time of mold clamping according to the embodiment of the present invention is viewed from the side. Fig. 4 is a diagram when the injection molding machine at the time of mold clamping according to the embodiment of the present invention is viewed from above. Fig. 5 is a diagram when the injection molding machine at the time of mold clamping according to the embodiment of the present invention is viewed from the rear.

As shown in Figs. 1 to 5, the injection molding machine includes a mold clamping unit 10 which performs mold closing, mold clamping, and mold opening of a mold unit 30, and the like. The mold unit 30 is configured with a stationary mold 32 and a movable mold 33. The mold clamping unit 10 includes a stationary platen 12, a movable platen 13, a rear platen 15, a tie bar 16, a toggle mechanism 20, a mold clamping motor 40, a motion conversion mechanism 50, and a center rod 60. In the following, a description will be made regarding a direction of movement (a rightward direction in Figs. 1 to 4) of the movable platen 13 when performing mold closing to be the front and regarding a direction of movement (a leftward direction in Figs. 1 to 4) of the movable platen 13 when performing mold opening to be the rear.

The stationary platen 12 is fixed to a frame Fr. The stationary mold 32 is mounted on the surface facing the movable platen 13 in the stationary platen 12.

The movable platen 13 is made so as to be able to move along a guide (for example, a guide rail) 17 which is laid on the frame Fr, and is made so as to be able to advance and retreat with respect to the stationary platen 12. The movable mold 33 is mounted on the surface facing the stationary platen 12 in the movable platen 13.

The movable platen 13 advances and retreats with respect to the stationary platen 12, whereby the movable mold 33 advances and retreats with respect to the stationary mold 32, and thus the mold closing, the mold clamping, and the mold opening of the mold unit 30 are performed.

The rear platen 15 is disposed on the side opposite to that of the stationary platen 12 with respect to the movable platen 13 (that is, at the rear of the movable platen 13). The rear platen 15 is connected to the stationary platen 12 through a plurality of (for example, four) tie bars 16 and placed on the frame Fr so as to be able to move in a mold opening and closing direction. In addition, the rear platen 15 may be made so as to be able to move along a guide which is laid on the frame Fr. The guide of the rear platen 15 may be shared by the guide 17 of the movable platen 13.

In addition, in this embodiment, a configuration is made such that the stationary platen 12 is fixed to the frame Fr and the rear platen 15 is movable in the mold opening and closing direction with respect to the frame Fr. However, a configuration may be made such that the rear platen 15 is fixed to the frame Fr and the stationary platen 12 is movable in the mold opening and closing direction with respect to the frame Fr.

The tie bars 16 are parallel to each other in the mold opening and closing direction and extend according to a mold clamping force. A mold clamping force detector is provided in at least one of the tie bars 16. The mold clamping force detector may be a strain gauge type and detects the strain of the tie bar 16, thereby detecting the mold clamping force.

In addition, the mold clamping force detector is not limited to the strain gauge type and may be a piezoelectric type, a capacitive type, a hydraulic type, an electromagnetic type, or the like, and a mounting position thereof is also not limited to the tie bar 16.

A male screw 18 is formed at a rear portion of each of the tie bars 16, and a female screw 19 is screwed onto the male screw 18. The female screw 19 is mounted so as to be able to rotate with respect to the rear platen 15. The female screw 19 is rotated, whereby the relative position of the rear platen 15 with respect to the tie bar 16 can be adjusted, and thus the distance between the rear platen 15 and the stationary platen 12 can be adjusted.

In addition, a configuration may be made in which the male screw 18 is formed at a front portion of each of the tie bars 16 and the female screw 19 is mounted so as to be able to rotate with respect to the stationary platen 12. The female screw 19 is rotated, whereby the relative position of the stationary platen 12 with respect to the tie bar 16 can be adjusted, and thus the distance between the rear platen 15 and the stationary platen 12 can be adjusted. A configuration may also be made in which the male screws 18 are formed at both the front portion and the rear portion of each of the tie bars 16 and the female screw 19 is mounted so as to be able to rotate with respect to each of the stationary platen 12 and the rear platen 15.

The toggle mechanism 20 is supported on the rear platen 15. As will be described in detail later, the toggle mechanism 20 is configured with a first link 22, a second link 24, a connecting pin 26 as a coupling which connects the first link 22 and the second link 24 so as to be able to be bent and stretched, and the like. If the toggle mechanism 20 is operated, the first link 22 and the second link 24 are bent and stretched with a center line of the connecting pin 26 as the center, and thus a thrust force according to an angle θ (refer to Fig. 1) between the first link 22 and the second link 24 is generated.

When mold closing is performed from the state shown in Fig. 1, the angle θ between the first link 22 and the second link 24 becomes gradually smaller. At the time of mold closing completion, the angle θ becomes a predetermined angle. The adjustment of the angle θ at the time of mold closing completion is performed by, for example, the adjustment of the distance between the stationary platen 12 and the rear platen 15.

At the time of mold clamping, the first link 22 and the second link 24 overlap substantially on a straight line, as shown in Fig. 3. The first link 22 is extended further than the natural length, and the second link 24 is shortened further than the natural length. In this way, a mold clamping force is generated.

When mold opening is performed from the state shown in Fig. 3, the angle θ between the first link 22 and the second link 24 becomes gradually larger, as shown in Fig. 1.

The mold clamping motor 40 operates the toggle mechanism 20, thereby advancing and retreating the movable platen 13. The rotation motion of the mold clamping motor 40 is converted into linear motion in the motion conversion mechanism 50 and the linear motion is transmitted to the toggle mechanism 20. A thrust force which is generated in the toggle mechanism 20 is transmitted to a central portion of the movable platen 13 through the center rod 60. At the time of mold clamping, the deflection of the movable platen 13 can be suppressed.

In a mold closing process, the mold clamping unit 10 advances the movable platen 13 by the driving of the mold clamping motor 40. The movable mold 33 and the stationary mold 32 come into contact with each other, whereby the mold closing process is completed. Thereafter, in a mold clamping process, the mold clamping motor 40 is driven again, thereby pressing the movable platen 13 forward, and thus generating a mold clamping force. During the mold clamping process, an injection unit (not shown) fills the inside of the mold unit 30 with a liquid molding material (for example, resin). After the filled molding material is solidified, a mold opening process is performed. In the mold opening process, the mold clamping unit 10 retreats the movable platen 13 by the driving of the mold clamping motor 40. After the mold opening completion, a molding product is ejected from the movable mold 33.

Next, the toggle mechanism 20, the mold clamping motor 40, the motion conversion mechanism 50, the center rod 60, and the like will be described in detail referring to Figs. 1 to 5 again.

The toggle mechanism 20 is supported on the rear platen 15 and disposed on the side of the rear platen 15 opposite to that of the movable platen 13 (that is, backward from the rear platen 15). The amount of a lubricant which is distributed from the toggle mechanism 20 between the rear platen 15 and the stationary platen 12 can be reduced further than in a case where the toggle mechanism 20 is disposed forward from the rear platen 15, as in the related art.

The center rod 60 transmits the thrust force which is generated in the toggle mechanism 20, to the movable platen 13. One end portion 61 of the center rod 60 is connected to the toggle mechanism 20 and the other end portion 62 of the center rod 60 is connected to the movable platen 13. The center rod 60 passes through a central portion of the rear platen 15 and one end portion 61 of the center rod 60 protrudes backward from the rear platen 15.

The toggle mechanism 20 connects the center rod 60 and the rear platen 15. The toggle mechanism 20 includes the first link 22, a first pin 23, the second link 24, a second pin 25, the connecting pin 26, an oscillation transmission mechanism 27, and the like.

The first link 22 is connected to the rear platen 15 through the first pin 23 and made so as to be able to oscillate with the center line of the first pin 23 as the center.

The second link 24 is connected to one end portion 61 of the center rod 60 through the second pin 25 and made so as to be able to oscillate with the center line of the second pin 25 as the center. The second link 24 is shorter than the first link 22.

A link group 21 is composed of the first link 22 and the second link 24. The link groups 21 are disposed symmetrically in a vertical direction with the center line of the mold unit 30 as the center and disposed on both upper and lower sides, when viewed from the side perpendicular to the mold opening and closing direction, as shown in Figs. 1 to 3. Up-and-down balance is good at the time of mold clamping.

When one of the first link 22 on the upper side and the first link 22 on the lower side oscillates in a clockwise direction, the other oscillates in a counterclockwise direction. Similarly, when one of the second link 24 on the upper side and the second link 24 on the lower side oscillates in the clockwise direction, the other oscillates in the counterclockwise direction.

Further, the link groups 21 are disposed symmetrically in a right-left direction with the center line of the mold unit 30 as the center and disposed on both right and left sides, when viewed in the mold opening and closing direction, as shown in Fig. 5. Right-and-left balance is good at the time of mold clamping.

The first link 22 on the upper left side and the first link 22 on the upper right side oscillate in the same direction, and the first link 22 on the lower left side and the first link 22 on the lower right side oscillate in the same direction. Similarly, the second link 24 on the upper left side and the second link 24 on the upper right side oscillate in the same direction, and the second link 24 on the lower left side and the second link 24 on the lower right side oscillate in the same direction.

The connecting pin 26 connects the first link 22 and the second link 24 so as to be able to be bent and stretched. The first link 22 and the second link 24 are made so as to be able to be bent and stretched with the center line of the connecting pin 26 as the center. When the first link 22 and the second link 24 are bent and stretched, the connecting pin 26 moves in a circle centered on the center line of the first pin 23.

Incidentally, at the time of mold clamping, moments in the opposite directions to each other occur in the link group 21 on the left side and the link group 21 on the right side.

Therefore, as shown in Fig. 5, a configuration may be made in which the connecting pin 26 on the upper left side and the connecting pin 26 on the upper right side are integrally formed and the connecting pin 26 on the lower left side and the connecting pin 26 on the lower right side are integrally formed. In this way, a moment is transmitted between the link group 21 on the left side and the link group 21 on the right side, and thus moments can be offset. Therefore, the connecting pin 26 having a small cross-sectional area can be used. Further, the number of connecting pins 26 can be reduced.

The oscillation transmission mechanism 27 transmits oscillation between the link group 21 on the upper side and the link group 21 on the lower side. The oscillation transmission mechanism 27 is composed of, for example, a plurality of gears 28. The plurality of gears 28 meshs with each other and rotates about the respective center lines.

The rotation center of the gear 28 on the upper side is disposed on the same straight line as the oscillation center of the first link 22 on the upper side. The gear 28 on the upper side is fixed to the first link 22 on the upper side through the first pin 23 on the upper side and rotates according to the oscillation of the first link 22 on the upper side. In addition, the gear 28 on the upper side may be fixed to the first link 22 on the upper side without using the first pin 23 on the upper side.

Similarly, the rotation center of the gear 28 on the lower side is disposed on the same straight line as the oscillation center of the first link 22 on the lower side. The gear 28 on the lower side is fixed to the first link 22 on the lower side through the first pin 23 on the lower side and rotates according to the oscillation of the first link 22 on the lower side. In addition, the gear 28 on the lower side may be fixed to the first link 22 on the lower side without using the first pin 23 on the lower side.

The oscillation transmission mechanism 27 transmits oscillation between the link group 21 on the upper side and the link group 21 on the lower side. When one of the first link 22 on the upper side and the first link 22 on the lower side oscillates in the counterclockwise direction, the other oscillates in the clockwise direction. In order for the first link 22 on the upper side to fall due to the force of gravity, the first link 22 on the lower side has to rise against the force of gravity, and therefore, gravity compensation is possible, and thus the influence of the force of gravity can be reduced.

In addition, in this embodiment, the gear 28 is fixed to the first link 22. However, the gear 28 may be fixed to the second link 24. Also in this case, oscillation can be transmitted between the link group 21 on the upper side and the link group 21 on the lower side, and thus gravity compensation is possible. The gears 28 may be respectively fixed to both the first link 22 and the second link 24.

The motion conversion mechanism 50 converts the rotation motion of the mold clamping motor 40 into linear motion and transmits the linear motion to the connecting pins 26. The motion conversion mechanism 50 has a ball screw shaft 51 as a male screw part, and a ball screw nut 52 as a female screw part, as shown in Figs. 4 and 5.

The ball screw shaft 51 is parallel to the vertical direction. The ball screw nut 52 is fixed to the connecting pin 26. If the mold clamping motor 40 rotates the ball screw shaft 51, the ball screw nut 52 moves along the ball screw shaft 51. In this way, the connecting pin 26 moves in a circle centered on the center line of the first pin 23, and thus the first link 22 and the second link 24 are bent and stretched with the center line of the connecting pin 26 as the center. At this time, the mold clamping motor 40 advances and retreats with respect to the frame Fr.

The ball screw nuts 52 are disposed symmetrically in the vertical direction with the center line of the mold unit 30 as the center and disposed on both upper and lower sides, when viewed from the side, as shown in Figs. 1 to 3.

The ball screw shaft 51 on the upper side, which corresponds to the ball screw nut 52 on the upper side, and the ball screw shaft 51 on the lower side, which corresponds to the ball screw nut 52 on the lower side, may have center lines shifted with respect to each other. However, the center lines may be on the same straight line, as shown in Figs. 4 and 5. Balance is good.

The ball screw shaft 51 on the upper side and the ball screw shaft 51 on the lower side may be separately formed. However, the ball screw shafts 51 may be integrally formed, as shown in Figs. 4 and 5. The number of mold clamping motors 40 can be reduced, and synchronization of the oscillation of the link group 21 on the upper side with the oscillation of the link group 21 on the lower side is easy.

In a case where the ball screw shaft 51 on the upper side and the ball screw shaft 51 on the lower side are integrally formed, the ball screw shaft 51 on one side is made so as to be a right-hand screw, and the ball screw shaft 51 on the other side is made so as to be a left-hand screw. If the mold clamping motor 40 rotates the ball screw shafts 51, the ball screw nut 52 on the upper side and the ball screw nut 52 on the lower side move in the opposite directions to each other along the ball screw shafts 51.

In addition, the motion conversion mechanism 50 in this embodiment is a ball screw. However, the motion conversion mechanism 50 may be a roller screw. The roller screw may be either of a planetary roller screw and a circulation roller screw.

The embodiment and the like of the injection molding machine have been described above. However, the present invention is not limited to the above-described embodiment and the like, and various modifications and improvements can be made within the scope of the concept of the present invention stated in the appended claims.

In the above-described embodiment, the center rod 60 corresponds to a thrust force transmission member stated in the appended claims. The thrust force transmission member may transmit the thrust force which is generated in the toggle mechanism 20, to a portion other than the central portion of the movable platen 13. If the toggle mechanism 20 is disposed backward from the rear platen 15, the amount of a lubricant which is distributed from the toggle mechanism 20 between the rear platen 15 and the stationary platen 12 can be reduced.

Further, in the above-described embodiment, the distance between the rear platen 15 and the stationary platen 12 is adjusted in order to adjust the angle θ between the first link 22 and the second link 24 at the time of mold closing completion. However, the distance between one end portion (for example, the second pin 25) of the toggle mechanism 20 and the movable platen 13 may be adjusted. In the latter case, any of the length of the center rod 60, the connection position of the toggle mechanism 20 in the center rod 60, and the connection position of the movable platen 13 in the center rod 60 may be made so as to be able to be adjusted.

## Claims

1. An injection molding machine comprising:
a stationary platen (12) on which a stationary mold (32) is mounted;
a movable platen (13) on which a movable mold (33) is mounted;
a rear platen (15) which is disposed on the side opposite to that of the stationary platen (12) with respect to the movable platen (13);
a toggle mechanism (20) for performing mold closing, mold clamping, and mold opening, which is supported by the rear platen (15) and which comprises a first link (22) and a second link (24);
a mold clamping motor (40) which operates the toggle mechanism (20) and moves the movable platen (13) through the toggle mechanism (20);
wherein
the toggle mechanism (20) is disposed on the side opposite to that of the movable platen (13) with respect to the rear platen (15), and
the first link (22) is connected to the rear platen (15) through a first pin (23) and made so as to be able to oscillate with the center line of said first pin (23) as the center.

2. The injection molding machine according to Claim 1, further comprising:
a thrust force transmission member (60) which transmits a thrust force which is generated in the toggle mechanism (20), to the movable platen (13),
wherein one end portion (61) of the thrust force transmission member (60) is connected to the toggle mechanism (20) and the other end portion (62) of the thrust force transmission member (60) is connected to the movable platen (13).

3. The injection molding machine according to Claim 2, wherein the thrust force transmission member (60) passes through the rear platen (15).

4. The injection molding machine according to Claim 2 or 3, wherein the thrust force transmission member (60) transmits a thrust force which is generated in the toggle mechanism (20), to a central portion of the movable platen (13).

5. The injection molding machine according to any one of Claims 2 to 4, wherein the toggle mechanism (20) includes a first link (22) which is connected to the rear platen (15) so as to be able to oscillate, a second link (24) which is connected to one end portion (61) of the thrust force transmission member (60) so as to be able to oscillate, and a coupling (26) which connects the first link (22) and the second link (24) so as to be able to be bent and stretched, and
a link group (21) is composed of the first link (22) and the second link (24).

6. The injection molding machine according to Claim 5, wherein the link groups (21) are disposed symmetrically in a vertical direction with a center line of the mold as the center, when viewed from the side perpendicular to a mold opening and closing direction.

7. The injection molding machine according to Claim 6, wherein the toggle mechanism (20) includes an oscillation transmission mechanism (27) which transmits oscillation between the link group (21) on the upper side and the link group (21) on the lower side.

8. The injection molding machine according to any one of Claims 1 to 7, further comprising:
a motion conversion mechanism (50) which converts rotation motion of the mold clamping motor (40) into linear motion and transmits the liner motion to the toggle mechanism (20),
wherein the motion conversion mechanism (50) includes a male screw part (51) and a female screw part (52) corresponding to the male screw part (51).

9. The injection molding machine according to Claim 8, wherein the female screw part (52) is fixed to the coupling (26), and
the mold clamping motor (40) rotates the male screw part (51), thereby moving the female screw part (52) along the male screw part (51).

10. The injection molding machine according to Claim 8 or 9, wherein the female screw parts (52) are disposed symmetrically in a vertical direction, and
the male screw part (51) corresponding to the female screw part (52) on the upper side and the male screw part (51) corresponding to the female screw part (52) on the lower side have center lines which are disposed on the same straight line.

11. The injection molding machine according to Claim 10, wherein the male screw part (51) corresponding to the female screw part (52) on the upper side and the male screw part (51) corresponding to the female screw part (52) on the lower side are integrally formed.

12. The injection molding machine according to any one of Claims 5 to 11, wherein the link groups (21) are disposed symmetrically in a right-left direction with a center line of the mold as the center, when viewed in a mold opening and closing direction.

13. The injection molding machine according to Claim 12, wherein the coupling (26) corresponding to the link group (21) on the left side and the coupling (26) corresponding to the link group (21) on the right side are integrally formed.

## Patentansprüche

1. Spritzgießmaschine, die Folgendes umfasst:
eine stationäre Platte (12), an der eine stationäre Form (32) angebracht ist,
eine bewegliche Platte (13), an der eine bewegliche Form (33) angebracht ist,
eine hintere Platte (15), die auf der Seite angeordnet ist, die derjenigen der stationären Platte (12) in Bezug auf die bewegliche Platte (13) gegenüberliegt,
einen Kniehebelmechanismus (20) zum Durchführen von Formschließen, Formklemmen und Formöffnen, der durch die hintere Platte (15) getragen wird und der ein erstes Glied (22) und ein zweites Glied (24) umfasst,
einen Formschließmotor (40), der den Kniehebelmechanismus (20) betätigt und die bewegliche Platte (13) durch den Kniehebelmechanismus (20) bewegt,
wobei
der Kniehebelmechanismus (20) auf der Seite angeordnet ist, die derjenigen der beweglichen Platte (13) in Bezug auf die hintere Platte (15) gegenüberliegt, und das erste Glied (22) durch einen ersten Stift (23) mit der hinteren Platte (15) verbunden und so hergestellt ist, dass es dazu in der Lage ist, mit der Mittellinie des ersten Stifts (23) als Mitte zu schwingen.

2. Spritzgießmaschine nach Anspruch 1, die ferner Folgendes umfasst:
ein Schubkraft-Übertragungselement (60), das eine Schubkraft, die in dem Kniehebelmechanismus (20) erzeugt wird, zu der beweglichen Platte (13) überträgt,
wobei der eine Endabschnitt (61) des Schubkraft-Übertragungselements (60) mit dem Kniehebelmechanismus (20) verbunden ist und der andere Endabschnitt (62) des Schubkraft-Übertragungselements (60) mit der beweglichen Platte (13) verbunden ist.

3. Spritzgießmaschine nach Anspruch 2, wobei das Schubkraft-Übertragungselement (60) durch die hintere Platte (15) hindurchgeht.

4. Spritzgießmaschine nach Anspruch 2 oder 3, wobei das Schubkraft-Übertragungselement (60) eine Schubkraft, die in dem Kniehebelmechanismus (20) erzeugt wird, zu einem zentralen Abschnitt der beweglichen Platte (13) überträgt.

5. Spritzgießmaschine nach einem der Ansprüche 2 bis 4, wobei der Kniehebelmechanismus (20) ein erstes Glied (22), das mit der hinteren Platte (15) verbunden ist, um so dazu in der Lage zu sein zu schwingen, ein zweites Glied (24), das mit einem Endabschnitt (61) des Schubkraft-Übertragungselements (60) verbunden ist, um so dazu in der Lage zu sein zu schwingen, und eine Kupplung (26), die das erste Glied (22) und das zweite Glied (24) verbindet, um so dazu in der Lage zu sein, gebeugt und gestreckt zu werden, umfasst und eine Gliedergruppe (21) aus dem ersten Glied (22) und dem zweiten Glied (24) zusammengesetzt ist.

6. Spritzgießmaschine nach Anspruch 5, wobei die Gliedergruppen (21) symmetrisch in einer vertikalen Richtung mit einer Mittellinie der Form als Mitte angeordnet sind, wenn sie von der Seite, senkrecht zu einer Formöffnungs- und -schließrichtung, betrachtet werden.

7. Spritzgießmaschine nach Anspruch 6, wobei der Kniehebelmechanismus (20) einen Schwingungsübertragungsmechanismus (27) einschließt, der eine Schwingung zwischen der Gliedergruppe (21) auf der oberen Seite und der Gliedergruppe (21) auf der unteren Seite überträgt.

8. Spritzgießmaschine nach einem der Ansprüche 1 bis 7, die ferner Folgendes umfasst:
einen Bewegungsumwandlungsmechanismus (50), der eine Drehbewegung des Formschließmotors (40) in eine lineare Bewegung umwandelt und die lineare Bewegung zu dem Kniehebelmechanismus (20) überträgt,
wobei der Bewegungsumwandlungsmechanismus (50) ein Außengewinde-Schraubenteil (51) und ein Innengewinde-Schraubenteil (52), der dem Außengewinde-Schraubenteil (51) entspricht, umfasst.

9. Spritzgießmaschine nach Anspruch 8, wobei das Innengewinde-Schraubenteil (52) an der Kupplung (26) befestigt ist und
der Formschließmotor (40) das Außengewinde-Schraubenteil (51) dreht, wodurch er das Innengewinde-Schraubenteil (52) entlang des Außengewinde-Schraubenteils (51) bewegt.

10. Spritzgießmaschine nach Anspruch 8 oder 9, wobei die Innengewinde-Schraubenteile (52) symmetrisch in einer vertikalen Richtung angeordnet sind und
das Außengewinde-Schraubenteil (51), das dem Innengewinde-Schraubenteil (52) auf der oberen Seite entspricht, und das Außengewinde-Schraubenteil (51), das dem Innengewinde-Schraubenteil (52) auf der unteren Seite entspricht, Mittellinien aufweisen, die auf der gleichen Geraden angeordnet sind.

11. Spritzgießmaschine nach Anspruch 10, wobei das Außengewinde-Schraubenteil (51), das dem Innengewinde-Schraubenteil (52) auf der oberen Seite entspricht, und das Außengewinde-Schraubenteil (51), das dem Innengewinde-Schraubenteil (52) auf der unteren Seite entspricht, einteilig geformt sind.

12. Spritzgießmaschine nach einem der Ansprüche 5 bis 11, wobei die Gliedergruppen (21) symmetrisch in einer Richtung von rechts nach links mit einer Mittellinie der Form als Mitte angeordnet sind, wenn sie in einer Formöffnungs- und -schließrichtung, betrachtet werden.

13. Spritzgießmaschine nach Anspruch 12, wobei die Kupplung (26), die der Gliedergruppe (21) auf der linken Seite entspricht, und die Kupplung (26), die der Gliedergruppe (21) auf der rechten Seite entspricht, einteilig geformt sind.

## Revendications

1. Une machine de moulage par injection comprenant :
un plateau fixe (12) sur lequel un moule fixe (32) est monté ;
un plateau mobile (13) sur lequel un moule mobile (33) est monté ;
un plateau arrière (15) qui est disposé sur le côté opposé à celui du plateau fixe (12) par rapport au plateau mobile (13) ;
un mécanisme d'articulation (20) pour réaliser la fermeture du moule, le serrage du moule et l'ouverture du moule, qui est supporté par le plateau arrière (15) et qui comprend une première liaison (22) et une seconde liaison (24) ;
un moteur de serrage de moule (40) qui actionne le mécanisme d'articulation (20) et déplace le plateau mobile (13) par le biais du mécanisme d'articulation (20) ;
dans laquelle :
le mécanisme d'articulation (20) est disposé sur le côté opposé à celui du plateau mobile (13) par rapport au plateau arrière (15), et
la première liaison (22) est raccordée au plateau arrière (15) par une première broche (23) et faite de sorte qu'elle peut osciller avec la ligne centrale de ladite première broche (23) en tant que centre.

2. La machine de moulage par injection selon la revendication 1, comprenant en outre :
un élément de transmission de force de poussée (60) qui transmet une force de poussée qui est générée dans le mécanisme d'articulation (20), au plateau mobile (13),
dans laquelle une partie d'extrémité (61) de l'élément de transmission de force de poussée (60) est raccordée au mécanisme d'articulation (20) et l'autre partie d'extrémité (62) de l'élément de transmission de force de poussée (60) est raccordée au plateau mobile (13).

3. La machine de moulage par injection selon la revendication 2, dans laquelle l'élément de transmission de force de poussée (60) traverse le plateau arrière (15).

4. La machine de moulage par injection selon la revendication 2 ou 3, dans laquelle l'élément de transmission de force de poussée (60) transmet une force de poussée qui est générée dans le mécanisme d'articulation (20), à une partie centrale du plateau mobile (13).

5. La machine de moulage par injection selon l'une quelconque des revendications 2 à 4, dans laquelle le mécanisme d'articulation (20) comprend une première liaison (22) qui est raccordée au plateau arrière (15) afin de pouvoir osciller, une seconde liaison (24) qui est raccordée à une partie d'extrémité (61) de l'élément de transmission de force de poussée (60) afin de pouvoir osciller, et un couplage (26) qui raccorde la première liaison (22) et la seconde liaison (24) afin de pouvoir être pliée et étirée, et
un groupe de liaisons (21) est composé de la première liaison (22) et de la seconde liaison (24).

6. La machine de moulage par injection selon la revendication 5, dans laquelle les groupes de liaisons (21) sont disposés de manière symétrique dans une direction verticale avec une ligne centrale du moule en tant que centre, lorsqu'ils sont observés depuis le côté perpendiculaire à la direction d'ouverture et de fermeture de moule.

7. La machine de moulage par injection selon la revendication 6, dans laquelle le mécanisme d'articulation (20) comprend un mécanisme de transmission d'oscillation (27) qui transmet l'oscillation entre le groupe de liaisons (21) sur le côté supérieur et le groupe de liaisons (21) sur le côté inférieur.

8. La machine de moulage par injection selon l'une quelconque des revendications 1 à 7, comprenant en outre :
un mécanisme de conversion de mouvement (50) qui convertit le mouvement de rotation du moteur de serrage de moule (40) en mouvement linéaire et transmet le mouvement linéaire au mécanisme de liaison (20),
dans laquelle le mécanisme de conversion de mouvement (50) comprend une partie de vis mâle (51) et une partie de vis femelle (52) correspondant à la partie de vis mâle (51).

9. La machine de moulage par injection selon la revendication 8, dans laquelle la partie de vis femelle (52) est fixée au couplage (26), et
le moteur de serrage de moule (40) fait tourner la partie de vis mâle (51), déplaçant ainsi la partie de vis femelle (52) le long de la partie de vis mâle (51).

10. La machine de moulage par injection selon la revendication 8 ou 9, dans laquelle les parties de vis femelle (52) sont disposées symétriquement dans une direction verticale, et
la partie de vis mâle (51) correspondant à la partie de vis femelle (52) sur le côté supérieur et la partie de vis mâle (51) correspondant à la partie de vis femelle (52) sur le côté inférieur ont des lignes centrales qui sont disposées sur la même ligne droite.

11. La machine de moulage par injection selon la revendication 10, dans laquelle la partie de vis mâle (51) correspondant à la partie de vis femelle (52) sur le côté supérieur et la partie de vis mâle (51) correspondant à la partie de vis femelle (52) sur le côté inférieur, sont formées de manière solidaire.

12. La machine de moulage par injection selon l'une quelconque des revendications 5 à 11, dans laquelle les groupes de liaisons (21) sont disposés de manière symétrique dans une direction droite - gauche avec une ligne centrale du moule en tant que centre, lorsqu'ils sont observés dans la direction d'ouverture et de fermeture du moule.

13. La machine de moulage par injection selon la revendication 12, dans laquelle le couplage (26) correspondant au groupe de liaisons (21) du côté gauche et le couplage (26) correspondant au groupe de liaisons (21) du côté droit sont formés de manière solidaire.
